# EUROPEAN PATENT APPLICATION

(11) **EP 4 620 363 A1**
(43) Date of publication of application: **24.09.2025**
(21) Application number: 25165493.5
(22) Date of filing: 21.03.2025
(51) Int. Cl.: A47J 42/38, A47J 47/01, A47G 19/24

(54) **SEASONING DISPENSER**

(30) Priority: 22.03.2024 CN 202420562853 U; 27.05.2024 CN 202421185167 U
(71) Applicant: Ningbo Chefshere Kitchen Technology Co., Ltd., Ningbo 315000 (CN)
(72) Inventor: ZHANG, Guoping, Ningbo, 315000 (CN)
(74) Representative: Bayramoglu et al.

(57) **Abstract**

The present application provides a seasoning dispenser, including a seasoning dispenser body, a light emitting portion and a switch. One end of the seasoning dispenser body is provided with a discharge port, and the other end of the seasoning dispenser body is connected to the light emitting portion. The switch is connected to the light emitting portion. An upper portion or a middle portion of the light emitting portion is light-transmissive. The present application achieves desirable flexibility.

## Description

### TECHNICAL FIELD

The present application relates to the technical field of seasoning devices, and in particular to a seasoning dispenser.

### BACKGROUND TECHNOLOGY

Seasoning dispensers are used frequently in daily life. There are many types of seasoning dispensers, in which the seasoning shaker, the seasoning jar, and the grinder are used commonly. For the sake of a rich taste of the food, the seasoning shaker and the seasoning jar are basically configured to store Sichuan pepper, pepper, salt and other powders of the seasoning that are ground by the grinder.

For some grinders in the prior art, a lamp bead is arranged by rotating the bottom of the grinder to provide illumination for the user when the grinder is in use, aiming to facilitate the use in low-light conditions. However, most of the time during use, the seasoning dispenser is placed on the table, and the aforementioned lamp bead solely serves illumination during use but cannot be used for ambient lighting or dining lighting. Consequently, additional lighting devices are required for the ambient lighting or dining lighting, resulting in poor flexibility of the seasoning dispenser.

### CONTENT OF THE UTILITY MODEL

An objective of the present application is to provide a seasoning dispenser with desirable flexibility in use.

Technical solutions of the present application are as follows: A seasoning dispenser includes a seasoning dispenser body, a light emitting portion and a switch, where one end of the seasoning dispenser body is provided with a discharge port, and the other end of the seasoning dispenser body is connected to the light emitting portion; the switch is connected to the light emitting portion; and an upper portion or a middle portion of the light emitting portion is light-transmissive.

The present application has the following advantages: The light emitting portion is provided on the seasoning dispenser body. The light emitting portion is located at an end of the seasoning dispenser body away from the discharge port. When the seasoning dispenser is placed on a table, the light emitting portion can be used as an illumination lamp or an ambient lamp to emit light, and thus there is no need for a user to provide another illumination device. The light emitting portion can also emit different colors of light to meet diverse requirements of the user, so the seasoning dispenser has desirable flexibility in use. Moreover, with different portions of a housing for transmitting the light, the seasoning dispenser achieves different lighting effects.

Preferably, the light emitting portion includes a light emitting mechanism; the light emitting mechanism includes a lamp bead; and the lamp bead is located on the middle portion of the light emitting portion, such that the lamp bead emits light upward. In this way, the user can enjoy beautiful ambient light without looking straight at a light source blindingly.

Preferably, a diameter of the upper portion of the light emitting portion is less than a diameter of a lower portion of the light emitting portion. Without affecting functions of the seasoning dispenser as the ambient lamp and the illumination lamp, this makes the light cover an outer wall of the housing, and further prevents the user from looking straight at the light source.

Preferably, the light emitting portion is provided with a protrusion; a lamp bead is provided in the protrusion; and a lower side of the protrusion is provided with a light transmissive plate. Without affecting functions of the seasoning dispenser as the ambient lamp and the illumination lamp, this makes the light scattered from the lower side of the light emitting protrusion to cover the outer wall of the housing, and further prevents the user from looking straight at the light source.

Preferably, the light emitting portion includes a light emitting mechanism; the light emitting mechanism includes a lamp bead and a printed circuit board (PCB); both the lamp bead and the switch are electrically connected to the PCB; and the PCB is connected to a battery.

Preferably, the seasoning dispenser body is a shaker bottle, and the light emitting portion is detachably connected to the shaker bottle.

Preferably, the seasoning dispenser body is a grinder, and the grinder may be an electric grinder.

Preferably, the light emitting portion includes a shell and a base; the shell is connected to the base; a sidewall or an upper end of the shell is light-transmissive; and the light emitting mechanism is connected to the base.

Preferably, a charging connector is provided on the PCB, and a charging hole cooperating with the charging connector is formed in the shell.

In conclusion, the present application has at least one of the following beneficial technical effects:
1. The light emitting portion is located at the end of the seasoning dispenser body away from the discharge port. When the seasoning dispenser is placed on the table, the light emitting portion can be used as an illumination lamp or an ambient lamp to emit light, and thus there is no need for a user to provide another illumination device. The light emitting portion can also emit different colors of light to meet diverse requirements of the user, so the seasoning dispenser has desirable flexibility in use. Moreover, with different portions of the housing for transmitting the light, the seasoning dispenser achieves different lighting effects.
2. The light emitting mechanism is provided on the middle portion of the light emitting portion, such that the light emitting mechanism emits light upward. In this way, the user can enjoy beautiful ambient light without looking straight at the light source blindingly.
3. The lower side of the protrusion is provided with the light transmissive plate, and the lower side of the light emitting protrusion is light-transmissive. Without affecting functions of the seasoning dispenser as the ambient lamp and the illumination lamp, this makes the light scattered from the lower side of the light emitting protrusion to cover the outer wall of the housing, and further prevents the user from looking straight at the light source.

### DESCRIPTION OF THE DRAWINGS

FIG. 1 is a schematic structural view of a seasoning dispenser according to an embodiment;
FIG. 2 is a schematic structural view of a seasoning dispenser according to an embodiment;
FIG. 3 is a sectional view of a seasoning dispenser according to an embodiment;
FIG. 4 is a sectional view of a seasoning dispenser according to an embodiment;
FIG. 5 is a sectional view of a seasoning dispenser according to an embodiment;
FIG. 6 is a sectional view of a seasoning dispenser according to an embodiment;
FIG. 7 is a sectional view of a seasoning dispenser according to an embodiment;
FIG. 8 is a schematic view illustrating connection between a seasoning dispenser and a controller according to an embodiment; and
FIG. 9 is a schematic modular view of a seasoning dispenser and a controller according to an embodiment.

In the figures: 1: seasoning dispenser body, 2: light emitting portion, 3: discharge port, 4: housing, 5: light emitting mechanism, 6: switch, 7: shaker bottle, 8: grinder, 9: lamp bead, 10: PCB, 11: battery, 12: shell, 13: base, 14: driving hole, 15: battery groove, 16: accommodation hole, 17: locating bump, 18: locating hole, 19: charging connector, 20: radial bump, 21: charging hole, 22: recess, 23: anti-theft module, 24: alarm module, 25: grinding assembly, 26: cartridge, and 27: protrusion.

### SPECIFIC IMPLEMENTATIONS

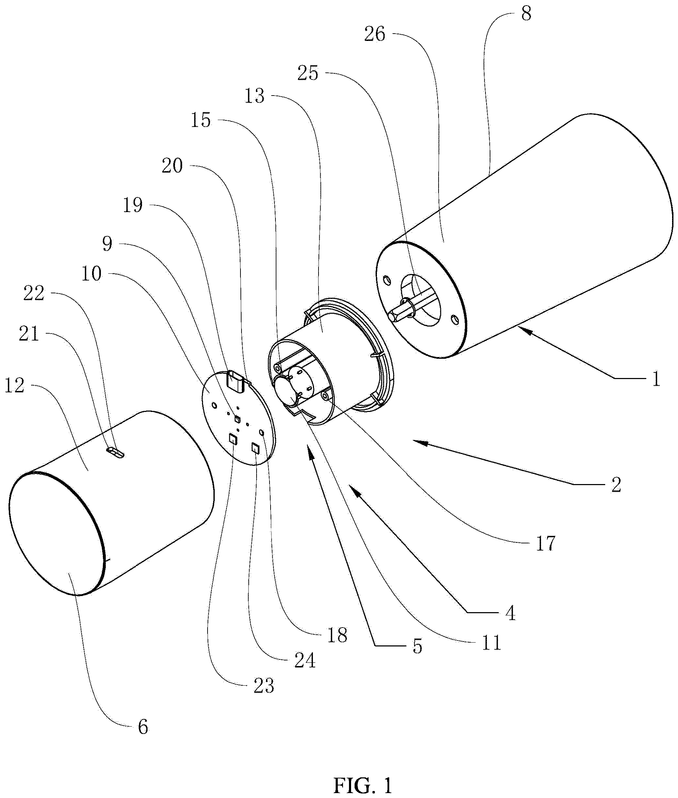

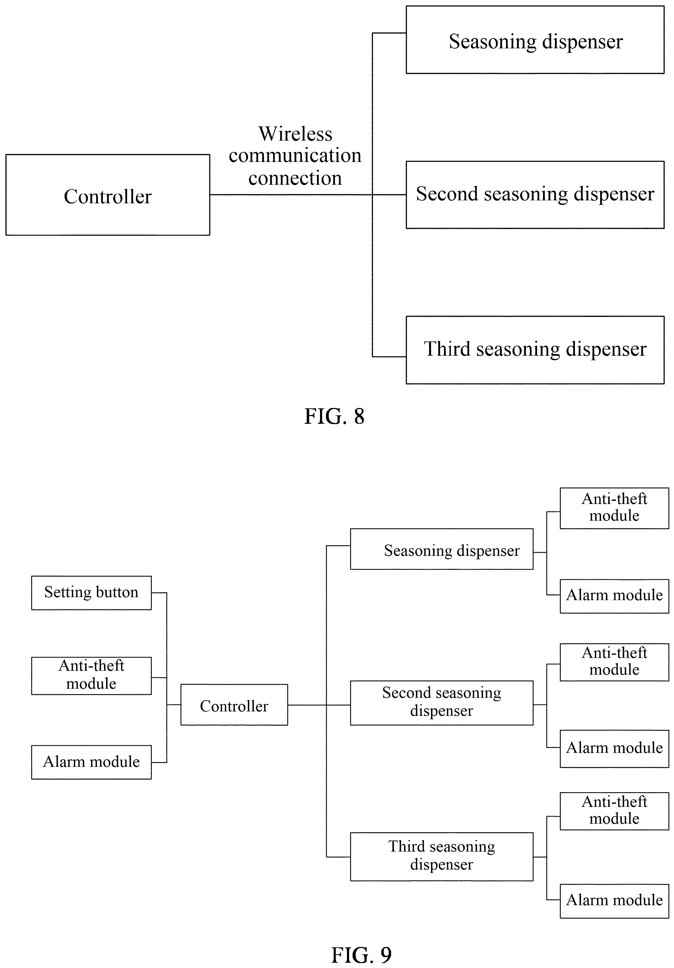

The present application will be further described in detail below with reference to FIGS. 1-9.

An embodiment of the present application provides a seasoning dispenser.

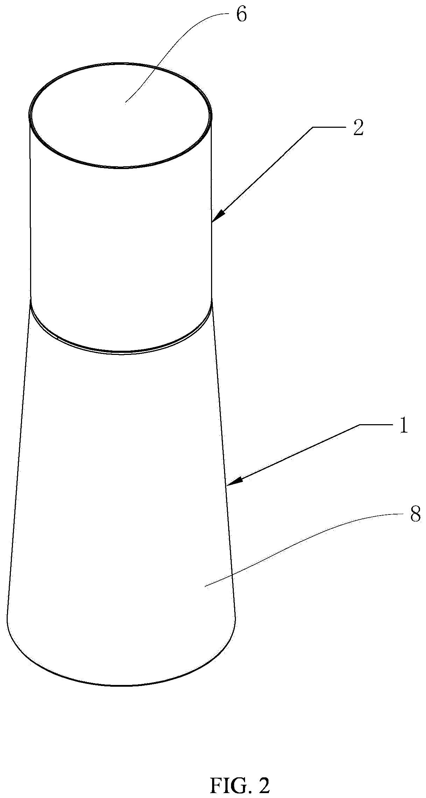

Referring to FIG. 1 and FIG. 2, the seasoning dispenser includes seasoning dispenser body 1. Light emitting portion 2, switch 6, and battery 11 are provided on the seasoning dispenser body 1. One end of the seasoning dispenser body 1 is provided with discharge port 3, and the other end of the seasoning dispenser body 1 is connected to the light emitting portion 2. The light emitting portion 2 includes housing 4 and light emitting mechanism 5 provided on the housing 4. The switch 6 is provided on the housing 4. The housing 4 includes shell 12 and base 13. The light emitting mechanism 5 includes lamp bead 9 and circular PCB 10. Battery groove 15 for accommodating battery 11 is formed in the base 13. The battery 11 is located in the battery groove 15. An upside of the base 13 is integrally connected to locating bump 17. Locating hole 18 is formed in the PCB 10. The PCB 10 is connected to the upside of the base 13 through cooperation between the locating hole 18 and the locating bump 17. The lamp bead 9 is soldered on an upside of the PCB 10. The lamp bead 9 is electrically connected to the PCB 10. Charging connector 19 is soldered on the upside of the PCB 10. A part of the charging connector 19 extends out of the PCB 10. A sidewall of the PCB 10 at the charging connector 19 is integrally connected to radial bump 20. A length of the radial bump 20 is less than a length of the charging connector 19 extending out of the PCB 10. The switch 6 is electrically connected to the PCB 10. The lamp bead 9 is located on a middle portion of the whole light emitting portion 2 to emit light upward, such that the light emitting portion 2 can be used as an illumination lamp or an ambient lamp, and thus there is no need for a user to provide another illumination device. The light emitting portion 2 can also emit different colors of light to meet diverse requirements of the user.

Frustoconical accommodation hole 16 is formed at one end of the shell 12. That is, a diameter of an end of the accommodation hole 16 close to a middle portion of the shell 12 is less than a diameter of the other end of the accommodation hole 16. The shell 12 covers the PCB 10 through the accommodation hole 16 and is connected to the base 13. At least one end of the base 13 is located in the shell 12. The circular PCB 10 is clamped into the accommodation hole 16 of the light-transmissive housing 4. The PCB 10 may also be frustoconical. That is, an outer diameter of the circular PCB 10 is greater than the diameter of the other end of the accommodation hole 16. Charging hole 21 is formed at a position of the light-transmissive housing 4 corresponding to the charging connector 19 of the PCB 10. The charging hole 21 cooperates with the charging connector 19, such that the charging connector 19 may extend out through the charging hole 21. Recess 22 is also formed at a position of the light-transmissive housing 4 cooperating with the radial bump 20. The recess 22 cooperates with the radial bump 20, such that the recess 22 may limit the PCB 10. The recess 22 communicates with the charging hole 21 integrally. An end of the base 13 located in the accommodation hole 16 is clamped with the PCB 10 to limit the PCB 10 in the accommodation hole 16, so there is no need to provide an additional limit structure for the PCB 10. The transparent shell 12 is structurally simple overall, easy-to-produce, and cost-effective, and is mounted conveniently, thereby reducing the cost.

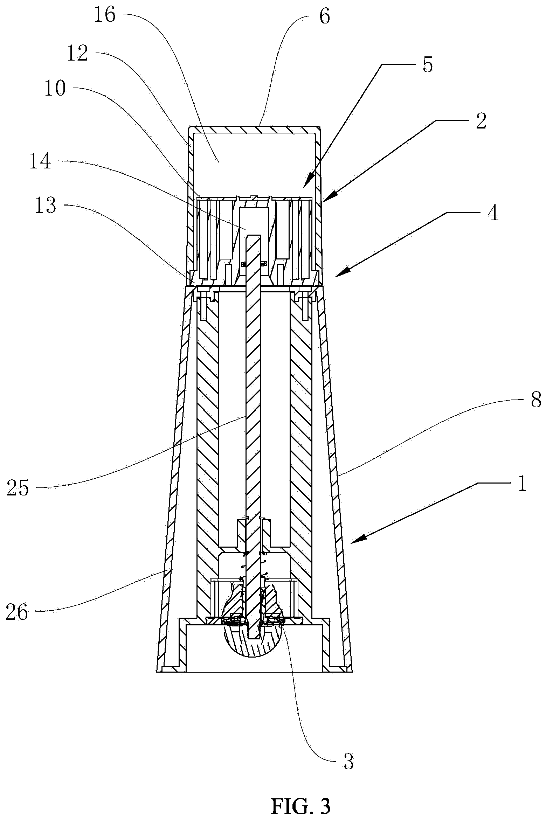

Referring to FIG. 1 and FIG. 3, the seasoning dispenser body 1 is manual grinder 8. The seasoning dispenser body 1 includes cartridge 26 with an inner cavity, and grinding assembly 25 provided in the cartridge 26. The grinding assembly 25 is axially provided in the cartridge 26. The discharge port 3 is formed at a lower end of the cartridge 26. The base 13 is located on an upside of the cartridge 26, such that the base 13 can be maintained conveniently. The base 13 may rotate relative to the cartridge 26. Driving hole 14 cooperating with a grinding mechanism of the manual grinder 8 is further formed in the base 13. The base 13 is connected to the grinding assembly 25 through the driving hole 14, such that the base 13 drives the grinding assembly 25 to rotate. The housing 4 serves as hand-held housing 4 of the manual grinder 8. After a whole pepper is put into the inner cavity of the cartridge by the user, the base 13 and the housing 4 are mounted, the housing 4 is rotated to drive the base 13, and the base 13 drives the grinding assembly 25 to rotate, thereby grinding the pepper in the inner cavity. Pepper powder falls from the discharge port 3 at the lower end of the seasoning dispenser. The hand-held housing 4 may be directly taken down and placed on the table to serve as an independent illumination device for use, thereby further improving the flexibility in use.

Further, in the embodiment, the shell 12 may be light-transmissive wholly, and may also be light-transmissive partially.

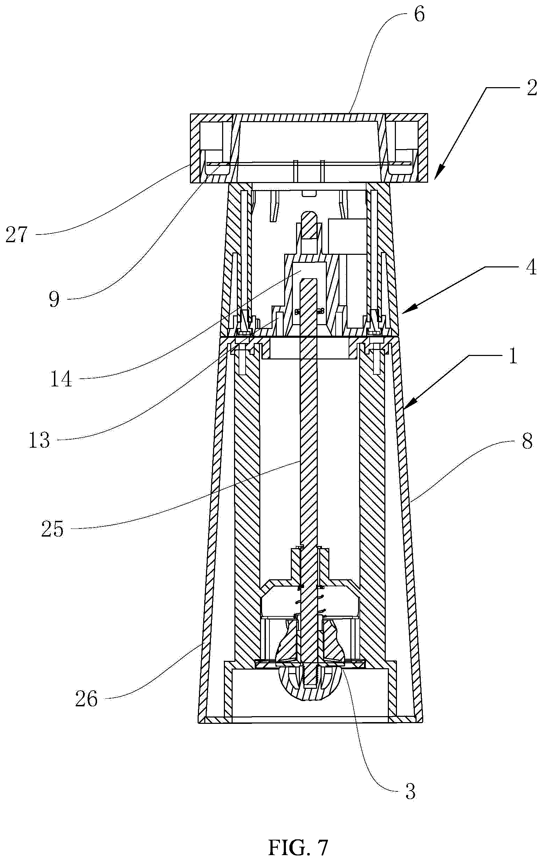

Further, in the embodiment, referring to FIG. 7, the base 13 is provided in the shell 12. The driving hole 14 cooperating with the grinding assembly 25 is formed at a lower end of the shell 12. An upper portion of the shell 12 is integrally connected to protrusion 27. A hollow cavity is formed in the protrusion 27. The lamp bead 9 is provided in the protrusion 27. A lower side of the protrusion 27 is provided with a light transmissive plate, such that light of the lamp bead 9 can be transmitted from the lower side of the light emitting protrusion 27. Without affecting functions of the seasoning dispenser as the ambient lamp and the illumination lamp, this makes the light scattered downward from the lower side of the protrusion 27 to cover an outer wall of the housing 4, and prevents the user from looking straight at a light source. The base 13 is located at a lower portion of the light emitting portion 2. The driving hole 14 cooperating with the grinding mechanism is formed in a middle portion of the base 13.

Further, in the embodiment, the lamp bead 9 is located in the hollow cavity of the protrusion 27. An upside of the lamp bead 9 is provided with a light transmissive plate, such that the light of the lamp bead 9 is transmitted from the upside of the light emitting protrusion 27. An upper end of the shell may also be provided with a light transmissive plate, thereby making an upper end of the seasoning dispenser transmit the light.

Further, in the embodiment, a diameter of an upper portion of the shell 12 is less than a diameter of a lower portion of the shell 12. The lamp bead 9 may further be provided around the base 13 in the shell 12. Without affecting functions of the seasoning dispenser as the ambient lamp and the illumination lamp, this makes the light of the lamp bead 9 emit upward to cover the outer wall of the housing 4, and further prevents the user from looking straight at the light source.

Further, in the embodiment, the diameter of the upper portion of the shell 12 may also be greater than the diameter of the lower portion of the shell 12. The diameter of the upper portion of the shell 12 may further be the same as the diameter of the lower portion of the shell 12.

Further, the shell 12 and the light transmissive plate in the embodiment may be made of a fully transparent acrylic material, may also be made of a frosted material, may further be made of a semi-transparent material, and may also be provided with a pattern.

Further, in the embodiment, the grinder 8 may be an elastic grinder. In this case, the battery 11 is provided on the seasoning dispenser body 1. The seasoning dispenser body is electrically connected to the battery 11, such that the light emitting portion and the electric grinder share the battery.

Further, in the embodiment, the switch 6 is touch switch 6, such that the housing 4 has good integrity, and formation of a hole in the housing 4 turns out to be unnecessary, thereby ensuring a desirable sealing effect. When the switch is provided at an end of the housing of the seasoning dispenser, a sidewall of the housing is a light emitting range of the housing. When the switch is provided on the sidewall of the housing, the whole housing except a position at the switch is the light emitting range of the housing.

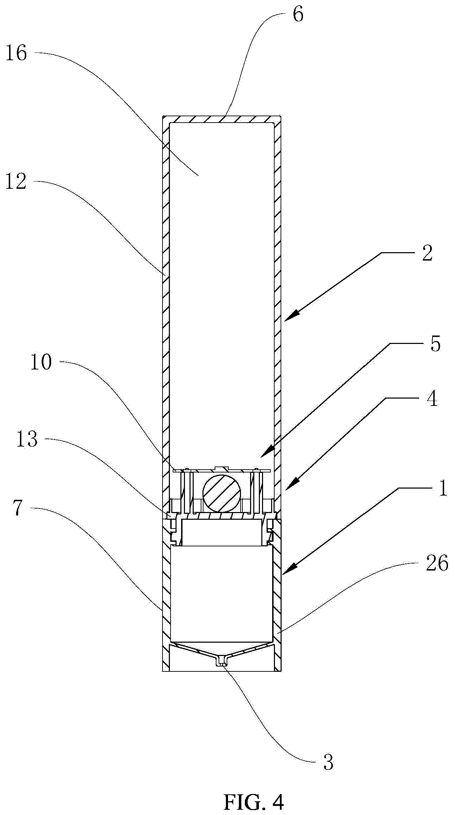

Further, in the embodiment, referring to FIG. 4, the seasoning dispenser body 1 may further be shaker bottle 7. The shaker bottle 7 includes cartridge 26 with an inner cavity. The discharge port 3 is formed at a lower end of the cartridge 26. The base 13 is also located at an upside of the cartridge 26. The light emitting portion 2 is detachably connected to the shaker bottle 7. The light emitting portion 2 can be detached alone for use. It not only can be used as the illumination lamp or the ambient lamp for dining on the table, but also can be used for illumination in shaking of the shaker bottle 7, thereby achieving better flexibility in use. The pepper powder is put into the cartridge 26 by the user, swaying the seasoning dispenser up and down can make the pepper powder shake out from the discharge bottle 3.

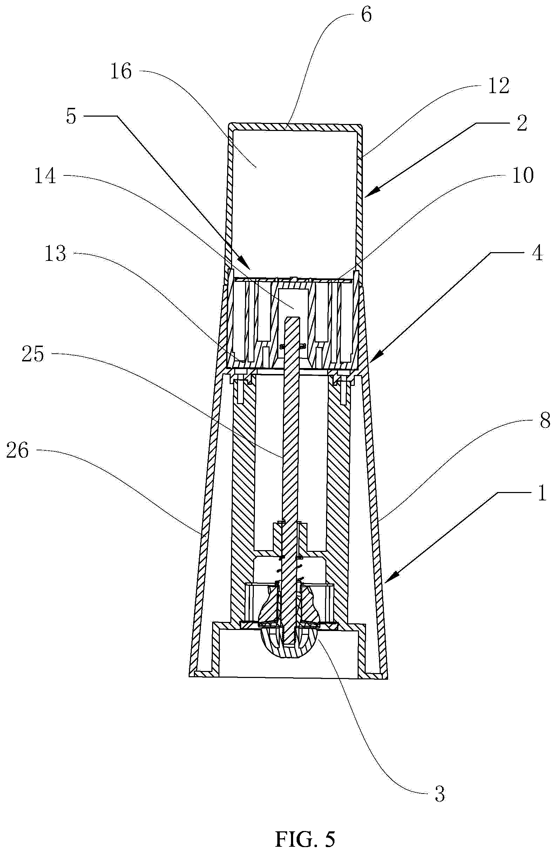

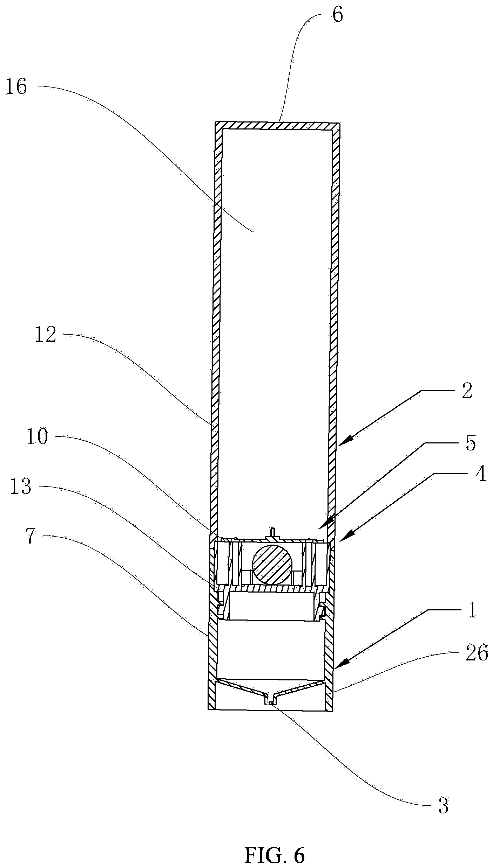

Further, in the embodiment, referring to FIG. 5 and FIG. 6, no matter whether the seasoning dispenser body 1 is the shaker bottle 7 or the manual grinder 8, the base 13 of the light emitting portion 2 may be provided in the cartridge 26. Since the lamp bead 9 is located on the base 13, this maximizes a footprint of the light emitting portion 2 in the whole seasoning dispenser to achieve a better illumination effect.

Further, in the embodiment, the seasoning dispenser is provided with anti-theft module 23 and alarm module 24. The anti-theft module 23 and the alarm module 24 on the seasoning dispenser may be controlled by a controller. The controller is in wireless communication connection with the seasoning dispenser. The anti-theft module 23 and the alarm module 24 are also provided on the controller. The anti-theft module 23 includes an electronic fence. After the seasoning dispenser knows that it leaves the controller by a preset distance through the anti-theft module 23, the alarm module 24 alarms. A setting button for setting a preset distance of the electronic fence is provided on the controller. A communication range of the electronic fence is set by the user through the setting button according to a specific size of a kitchen. After the seasoning dispenser leaves the kitchen, both the seasoning dispenser and the controller emit light and a beeping sound. This makes the user know that the seasoning dispenser is away from the controller through an alarm of the controller, and know a position of the seasoning dispenser through an alarm of the seasoning dispenser, thereby effectively preventing the seasoning dispenser from being stolen.

Further, in the embodiment, there may be a plurality of seasoning dispensers. The controller may be in wireless communication connection with the plurality of seasoning dispensers. Positions of the seasoning dispensers are limited through the electronic fence.

Further, in the embodiment, the alarm module 24 may be provided only on the seasoning dispenser, so as to reduce the consumption of alarms, thereby reducing the cost. The alarm module may also be provided only on the controller.

Further, in the embodiment, the alarm module 24 may alarm through a buzzer, may also alarm through a vibrator, may further alarm through light, and may also alarm through a random combination of the buzzer, the vibrator and the light.

Further, in the embodiment, the electronic fence may be a radio-frequency (RF) electronic fence, a Bluetooth (BT) electronic fence, an infrared electronic fence, a micropower radio transmission electronic fence, etc.

The above are preferred embodiments of the present application, but the protection scope of the present application is not limited thereto. Therefore, all equivalent changes made in accordance with the structure, shape, and principle of the present application shall fall within the protection scope of the present application.

## Claims

1. A seasoning dispenser, **characterized by** comprising a seasoning dispenser body (1), a light emitting portion (2) and a switch (6), wherein one end of the seasoning dispenser body (1) is provided with a discharge port (3), and the other end of the seasoning dispenser body (1) is connected to the light emitting portion (2); the switch (6) is connected to the light emitting portion (2); and an upper portion or a middle portion of the light emitting portion (2) is light-transmissive.

2. The seasoning dispenser according to claim 1, **characterized in that** the light emitting portion (2) comprises a light emitting mechanism (5); the light emitting mechanism (5) comprises a lamp bead (9); and the lamp bead is located on the middle portion of the light emitting portion (2), such that the lamp bead (9) emits light upward.

3. The seasoning dispenser according to claim 2, **characterized in that** a diameter of the upper portion of the light emitting portion (2) is less than a diameter of a lower portion of the light emitting portion (2).

4. The seasoning dispenser according to claim 1, **characterized in that** the light emitting portion (2) is provided with a protrusion (27); a lamp bead (9) is provided in the protrusion (27); and a lower side of the protrusion (27) is provided with a light transmissive plate.

5. The seasoning dispenser according to claim 1, **characterized in that** the light emitting portion (2) comprises a light emitting mechanism (5); the light emitting mechanism (5) comprises a lamp bead (9) and a printed circuit board (PCB) (10); both the lamp bead (9) and the switch (6) are electrically connected to the PCB (10); and the PCB (10) is connected to a battery (11).

6. The seasoning dispenser according to claim 1, **characterized in that** the seasoning dispenser body (1) is a shaker bottle (7), and the light emitting portion (2) is detachably connected to the shaker bottle (7).

7. The seasoning dispenser according to claim 1, **characterized in that** the seasoning dispenser body (1) is a grinder (8), and the grinder (8) may be an electric grinder (8).

8. The seasoning dispenser according to claim 5, **characterized in that** the light emitting portion (2) comprises a shell (12) and a base (13); the shell (12) is connected to the base (13); a sidewall or an upper end of the shell (12) is light-transmissive; and the light emitting mechanism (5) is connected to the base (13).

9. The seasoning dispenser according to claim 8, **characterized in that** a charging connector (19) is provided on the PCB (10), and a charging hole (21) cooperating with the charging connector (19) is formed in the shell (12).

10. The seasoning dispenser according to claim 1, **characterized by** further comprising an anti-theft module (23) and an alarm module (24), wherein the anti-theft module (23) is connected to the light emitting portion (2), and the alarm module (24) is connected to the light emitting portion (2).
